# EUROPÄISCHE PATENTANMELDUNG

(11) **EP 0 848 312 A1**
(43) Veröffentlichungstag der Anmeldung: **17.06.1998**
(21) Anmeldenummer: 97120710.5
(22) Anmeldetag: 26.11.1997
(51) Int. Cl.: G05D 23/13, F16K 31/00, B01F 5/00

(54) **Mischvorrichtung für Fluide**

(30) Priorität: 12.12.1996 DE 19651641
(71) Anmelder: MESSER GRIESHEIM GMBH, 60547 Frankfurt (DE)
(72) Erfinder: Meyer, Gesa, 41542 Dormagen (DE); Michel, Friedel, 40699 Erkrath (DE)

(57) **Zusammenfassung**

Die Erfindung betrifft eine Mischvorrichtung für Fluide mit zwei Einlässen, über die Fluide mit jeweils verschiedenen Temperaturen eingeleitet werden können, sowie einem Auslaß für das gemischte Fluid, die mindestens an einem der Einlässe ein Ventil aufweist, das von einem elastischen Element beaufschlagt wird. Erfindungsgemäß ist das elastische Element in dem Auslaß angeordnet, wobei die Festigkeit des elastischen Elements temperaturabhängig ist und das elastische Element die Öffnungsstellung des Ventils bei einer Abweichung der Ist-Temperatur des aus dem Auslaß ausströmenden Fluids von einer vorgegebenen Solltemperatur so verändert, daß die Temperatur des ausströmenden Fluids auf die Solltemperatur zurückgeführt wird.

## Beschreibung

Die Erfindung betrifft eine Mischvorrichtung für Fluide gemäß dem Oberbegriff des Anspruchs 1. Derartige Mischvorrichtungen werden bei technischen Prozessen verwendet, bei denen ein Fluid mit einer bestimmten Temperatur dem Prozeß zugeführt werden soll. Die Erfindung findet insbesondere eine Anwendung bei einem Motor, der mit einem flüssigen Gas, z.B. LNG (Liquid Natural Gas) oder flüssigem Wasserstoff, betrieben wird. Bei einem derartigen Motor wird der aus einem Kryokraftstoffbehälter entnommene tiefkalte Kraftstoff auf dem Weg zum Verbrennungsraum über einen Wärmetauscher verdampft und auf eine Temperatur von ungefähr -10°C bis +10°C gebracht. Kleinere Mengen von nur geringfügig vorgewärmtem Kraftstoff werden hinter dem Wärmetauscher in einer Mischvorrichtung zudosiert, um so eine definierte Temperatur einzustellen, die für eine optimale Verbrennung im Motor erforderlich ist.

Üblicherweise wird bei derartigen Mischvorrichtungen die Temperatur des ausströmenden gemischten Fluids über einen elektrischen Temperatursensor erfaßt, und das Mischungsverhältnis von warmen und kaltem Fluid wird in Abhängigkeit von dem Ausgangssignal des Sensors durch mechanisches oder elektrisches Ansteuern eines oder mehrerer Ventile derart variiert, daß eine vorgegebene Solltemperatur eingehalten wird. Diese Regelvorrichtung erfordert zusätzliche Hilfsenergie und zusätzliche Bauelemente in Form von Sensoren, Reglern und Stellelementen, welche das von der Mischvorrichtung beanspruchte Raumvolumen vergrößern. In vielen Fällen ist die Zuführung von Hilfsenergie nicht möglich oder nachteilig. Weiterhin ist der zu Verfügung stehende Raum für die Mischvorrichtung häufig begrenzt.

Es ist die Aufgabe der Erfindung, eine Mischvorrichtung für Fluide gemäß dem Oberbegriff des Anspruchs 1 zu schaffen, welche ohne Hilfsenergie arbeitet und einfach in kompakter Bauweise realisiert werden kann.

Diese Aufgabe wird durch eine Mischvorrichtung nach Anspruch 1 gelöst. Vorteilhafte Ausführungsformen der Erfindung sind in den Unteransprüchen angegeben.

Erfindungsgemäß wird die Änderung der Festigkeit mit der Temperatur des die Öffnungsstellung des Ventils steuernden elastischen Elements dazu ausgenutzt, die Temperatur des ausströmenden Fluids zu regeln. Das elastische Element übernimmt somit die Funktion eines Temperatursensors und eines Stellelements, was eine kompakte Bauweise ermöglicht. Dabei ist das elastische Element vollständig in die Mischvorrichtung integriert.

Als Material für das vorzugsweise als Feder ausgebildete elastische Element sind Formgedächtnislegierungen besonders geeignet. Formgedächtnislegierungen weisen einen thermoelastischen Phasenübergang von einem Zustand einer Hochtemperaturphase (Austenit) in einen Zustand einer Tieftemperaturphase (Martensit) auf, der durch eine Übergangstemperatur charakterisiert ist. Der Übergang vollzieht sich in einem Temperaturbereich gewisser Breite, in der sich die Phasenanteile kontinuierlich ändern bis die Umwandlung abgeschlossen ist. Bei diesem Übergang ändert sich das Festigkeitsverhalten in einem relativ schmalen Temperaturbereich grundsätzlich. Während das Spannungs-Drehungs-Verhalten des Austenits dem konventioneller Legierungen entspricht, zeigt die martensitische Phase ausgeprägtes pseudoplastisches Verhalten.

Im Vergleich zur Hochtemperaturphase ist die martensitische Phase weich und läßt sich unter Aufwendung einer geringen Kraft plastisch verformen. Bei Erwärmung entsteht zunehmend Austenit und die Verformung bildet sich zurück. Dieser Effekt ist in einem gewissen Verformungsbereich reversibel und läßt sich beliebig oft wiederholen.

Bei einem System aus zwei gegeneinander arbeitenden Federn, eine aus Formgedächtnislegierung, eine aus konventionellem Stahl, wirkt sich der Effekt wie folgt aus: Bei tiefer Temperatur staucht die konventionelle Stahlfeder die in ihrem Tieftemperaturzustand weiche Formgedächtnislegierung. Mit zunehmender Erwärmung erhöht sich der Phasenanteil an Austenit und somit die Festigkeit der Formgedächtnislegierung, bis sie schließlich die Festigkeit der konventionellen Feder übersteigt und diese stauchen kann.

Formgedächtnislegierungen haben den weiteren Vorteil, daß der Temperaturbereich, in dem dieser Übergang stattfindet, im Bereich von normalen Umgebungstemperaturen liegt. Insbesondere sind Übergangstemperaturen im Bereich von -20°C bis 100°C möglich, wobei im Rahmen der vorliegenden Erfindung Übergangstemperaturen im Bereich von -10°C bis +10°C bevorzugt sind. Die Übergangstemperatur und die Breite des Übergangs, d.h. der Temperaturbereich, in dem ein starker Abfall der Festigkeit auftritt, hängen von der Art der Legierung und der Behandlung bei der Herstellung ab und können in weiten Bereichen variiert werden. Die Hersteller solcher Formgedächtnislegierungen sind in der Lage, Formgedächtnislegierungen mit einer gewünschten Temperatur und einer gewünschten Übergangscharakteristik auf Anfrage herzustellen. Für Anwendungen mit einer Regeltemperatur im Bereich von -10°C bis +10°C sind NiTi-Legierungen bevorzugt. Grundsätzlich können anstelle von Formgedächtnislegierungen auch andere Materialen verwendet werden, welche z.B. einen vergleichbaren Abfall des Elastizitätsmoduls über einen relativ geringen Temperaturbereich aufweisen.

Während die nötige Gegenkraft zum Rückstellen des Ventils z.B. durch den Druck des einströmenden Fluids geliefert werden kann, ist es bevorzugt, eine Gegenkraft durch eine Feder zu erzeugen, welche dem ersten elastischen Element entgegenwirkt, das ebenfalls bevorzugt in Form einer Feder ausgebildet ist.

Gemäß einer bevorzugten Ausführungsform der Erfindung sind der Fluidauslaß und der durch das Ventil geregelte Einlaß miteinander ausgerichtet und das Ventil ist in der Form eines Doppelkolbens ausgebildet, wobei die eine Kolbenseite an der in dem Auslaß angebrachten Feder aus einer Formgedächtnislegierung abgestützt ist und die andere Kolbenseite als Ventilkopf ausgebildet ist, der an der Edelstahlfeder abgestützt ist und eine Ventilöffnung je nach Lage des Doppelkolbens verschließt oder freigibt. Je nach der Breite des Übergangsbereichs der Formgedächtnislegierung, der Regeltemperatur und der Ausgestaltung des Ventilkopfes kann entweder eine Regelung, bei der das Ventil entweder vollständig offen oder vollständig geschlossen ist, oder eine kontinuierliche Regelung, bei welcher der Zustrom von Fluid über das Ventil kontinuierlich eingestellt werden kann, vorgesehen sein.

Die Regeltemperatur kann durch Variieren der Spannung der die Gegenkraft erzeugenden Edelstahlfeder und/oder durch Variieren der Spannung der Feder aus der Formgedächtnislegierung verändert werden, z.B. durch Verlagern des an dem Gehäuse der Mischvorrichtung abgestützten Endes der Feder. Das Regelverhalten ist dabei durch die Spannung der Edelstahlfeder bei einer bestimmten Ventilstellung, z.B. bei geschlossenem Ventil, die entsprechende Gegenkraft der Feder aus der Formgedächtnislegierung oberhalb der Übergangstemperatur und den Phasenübergang der Formgedächtnislegierung bestimmt. Mit anderen Worten ist die Regeltemperatur durch diejenige Temperatur auf der Übergangskurve der Formgedächtnislegierung bestimmt, bei dem sich die Kräfte der Feder aus der Formgedächtnislegierung und der Edelstahlfeder gerade so kompensieren, daß der Ventilkopf gerade noch in derjenigen Stellung gehalten wird, welche der Soll-Zuströmrate an dem geregelten Einlaß entspricht.

Weitere Merkmale und Vorteile der Erfindung ergeben sich aus der nachfolgenden Beschreibung einer bevorzugten Ausführungsform der Erfindung anhand der beigefügten Zeichnungen. Es zeigen:
- Fig. 1: eine Ausführungsform der erfindungsgemäßen Mischvorrichtung mit einer Warmgas- und einer Kaltgaszuleitung, wobei die Kaltgaszuleitung in dem dargestellten Zustand vollständig offen ist,
- Fig. 2: die Ausführungsform der erfindungsgemäßen Mischvorrichtung gemäß Fig. 1, wobei in dem dargestellten Zustand die Kaltgaszuleitung vollständig geschlossen ist,
- Fig. 3: ein Anwendungsbeispiel für eine erfindungsgemäße Mischvorrichtung.

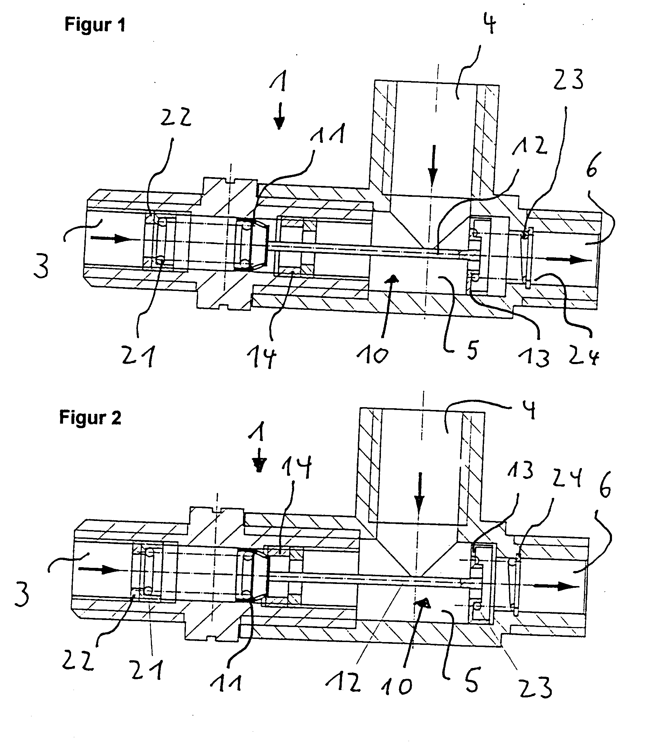

Die Figuren 1 und 2 stellen eine beispielhafte Ausführungsform einer erfindungsgemäßen Mischvorrichtung dar. Die Mischvorrichtung ist insgesamt mit der Bezugsziffer 1 bezeichnet. Sie weist einen Einlaß 3 für kaltes Gas und einen Einlaß 4 für warmes Gas auf, die in einer Mischkammer 5 vermischt werden, wobei das gemischte Gas über einen Auslaß 6 austritt. Der Einlaß 3 und der Auslaß 6 sind durch einen zylinderförmigen Hohlraum miteinander verbunden, in dem ein Doppelkolben 10 in Längsrichtung verschiebbar gelagert ist.

Der Doppelkolben weist ein erstes, als Ventilkopf ausgebildetes Kolbenende 11 auf, das über einem Stößel 12 mit einem zweiten Kolbenende 13 verbunden ist. Der Ventilkopf 11 ist gegenüber einem in dem Einlaß 3 angeordneten Ventilsitz 14 in Längsrichtung beweglich und bildet mit diesem zusammen ein Einlaßventil für die Kaltgaszufuhr. Fig.1 zeigt die offene Ventilstellung, in welcher der Ventilkopf 11 von dem Ventilsitz 14 beabstandet ist und Fig.2 zeigt die geschlossene Ventilstellung, in welcher der Ventilkopf 11 auf dem Ventilsitz 14 aufsitzt. Durch eine Verlagerung des Ventilkopfs 11 in Längsrichtung des Einlasses 3 aus der in Fig. 2 gezeigten vollständig geschlossenen Stellung heraus kann die Zufuhr des kalten Gases kontinuierlich variiert werden. Der Ventilkopf 11 ist von einer Schraubendruckfeder aus Edelstahl 21 in Schließrichtung des Ventils 11, 14 beaufschlagt, welche an ihrem anderen Ende an einem Vorsprung 22 in dem Einlaß 3 abgestützt ist.

Das zweite Kolbenende 13 ist in Öffnungsrichtung des Ventils 11, 14 von einer Schraubendruckfeder 23 aus einer Formgedächtnislegierung beaufschlagt, welche auf einem Ringeinsatz 24 abgestützt ist. Das zweite Kolbenende 13 weist eine Öffnung zum Hindurchlassen des in der Mischkammer 5 gemischten Gases auf. Die Formgedächtnislegierung, aus welcher die Feder 23 besteht, verändert ihre Festigkeit zwischen zwei Werten über einen Temperaturbereich, in welchem die Solltemperatur des ausströmenden gemischten Gases liegt. Idealerweise entspricht die Solltemperatur der Übergangstemperatur. Bei der Solltemperatur des ausströmenden Gases halten die beiden Federn 21 und 23 den Ventilkopf 11 in einer Stellung, welche dem Mischungsverhältnis von kaltem Gas und warmen Gas unter Sollbedingungen entspricht. Nimmt die Temperatur des gemischten Gases im Auslaß 6 ab, wird die Feder 23 aufgrund der Abnahme der Festigkeit weicher, so daß die Zufuhr kalten Gases über dem Einlaß 3 verringert wird und die Temperatur des gemischten Gases sich erhöht. Umgekehrt wird die Feder 23 härter, wenn das ausströmende gemischte Gas sich über die Solltemperatur hinaus erwärmt. Dementsprechend verschiebt die Feder 23 den Ventilkopf 11 in Öffnungsrichtung vom Ventilsitz 14 weg, so daß die Kaltgaszufuhr erhöht und die Temperatur des gemischten Gases verringert wird. Auf diese Weise wird die Temperatur des ausströmenden Gases auf die Solltemperatur eingeregelt. Eine Änderung der Solltemperatur kann durch eine Änderung der Federkraft der Feder 21, z.B. durch Verschieben des Vorsprungs 22 in dem Einlaß 3 erreicht werden, wobei die Solltemperatur innerhalb des Übergangsbereichs der Feder 23 bleiben sollte.

Das Regelverhalten kann durch eine geeignete Wahl der Übergangseigenschaften der Formgedächtnislegierung, aus welcher die Feder 23 besteht, variiert werden. Wenn die Formgedächtnislegierung einen relativ scharfen oder abrupten Übergang aufweist, reagiert das Ventil im Einlaß 3 stärker auf eine Temperaturänderung als bei einem breiteren Übergang. Im Extremfall reagiert das Ventil auf eine Abweichung von der Solltemperatur entweder mit einem vollständigen Öffnen oder mit einem vollständigen Schließen der Kaltgaszuleitung.

Die vorangehend beschriebene Regelungsweise ist lediglich als Beispiel anzusehen. Während bei der vorangehend beschriebenen Regelung die Temperatur des ausströmenden Gases in beide Richtungen geregelt wird, kann auch vorgesehen sein, daß eine Regelung nur erfolgt, wenn die Temperatur des Warmgases einen vorgeschriebenen Wert überschreitet. In diesem Fall bleibt das Ventil 11, 14 im Kaltgaseinlaß 3 vollständig geschlossen, bis die Temperatur des Warmgases den vorbestimmten Wert überschreitet. Beim Überschreiten dieser Temperatur wird das Ventil 11, 14 geöffnet und die Temperatur des autretenden Gases durch das Beimischen von kaltem Gas unter den vorgegebenen Wert heruntergeregelt.

Anstelle der Kaltgaszufuhr kann auch die Warmgaszufuhr geregelt werden, oder es kann eine Regelung sowohl am Einlaß 3 als auch am Einlaß 4 vorgesehen sein. Die erfindungsgemäße Mischvorrichtung kann auch für nicht gasförmige Fluide verwendet werden.

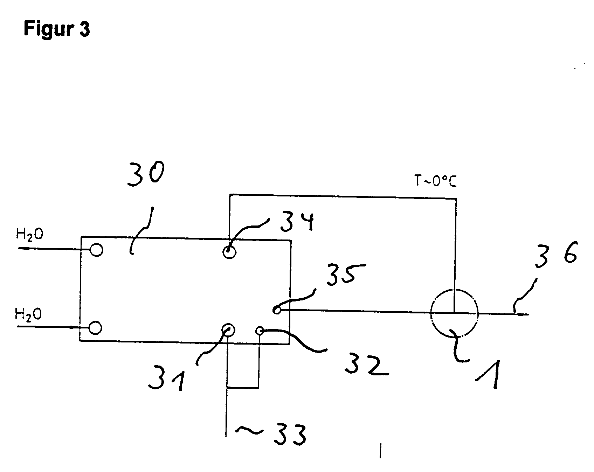

Fig. 3 zeigt ein Anwendungsbeispiel der erfindungsgemäßen Mischvorrichtung bei einem Motor, der mit Flüssiggas betrieben wird. Der Motor weist ein Wärmetauschersystem 30 auf, bei dem Wasser als Austauschmedium verwendet wird.

Der verflüssigte Kraftstoff wird zwei Eingängen 31 und 32 des Wärmetauschers 30 über eine Zuführleitung 33 zugeführt. Der über den Einlaß 31 eintretende Kraftstoff wird verdampft und tritt als Hauptgasstrom mit einer Temperatur von ungefähr 0°C an dem Auslaß 34 aus dem Wärmetauscher 30 aus. Der über den Einlaß 32 eintretende Kraftstoff wird auf eine Temperatur unterhalb von 0°C erwärmt. In der Mischvorrichtung 1 werden die beiden Gasströme zusammengeführt und der aus dem Auslaß 6 der Mischvorrichtung 1 austretende gemischte Gasstrom wird über eine Abführleitung 36 dem Verbrennungsraum des Motors zugeführt. Die Mischvorrichtung 1 hält dabei die Temperatur des austretenden Gasstroms auf einer für die Verbrennung optimalen Temperatur.

## Patentansprüche

1. Mischvorrichtung für Fluide mit
- einem ersten Einlaß (3) für ein Fluid mit einer ersten Temperatur,
- mindestens einem weiteren Einlaß (4) für ein Fluid mit einer von der ersten Temperatur verschiedenen Temperatur,
- einem Auslaß (6) für das gemischte Fluid,
- mindestens einem von einem elastischen Element betätigbaren Ventil (11, 14) zum Steuern der Fluidströmung durch einen der Einlässe
dadurch gekennzeichnet,
daß das elastische Element (23) in dem Auslaß (6) angeordnet ist,
daß die Fertigkeit des elastischen Elements (23) temperaturabhängig ist
und daß das elastische Element (23) die Öffnungsstellung des Ventils (11, 14) bei einer Abweichung der Ist-Temperatur des aus dem Auslaß (6) auströmenden gemischten Fluids von einer vorgegebenen Solltemperatur so verändert, daß die Temperatur des ausströmenden Fluids auf die Solltemperatur zurückgeführt wird.

2. Mischvorrichtung nach Anspruch 1,
dadurch gekennzeichnet,
daß die Festigkeit des elastischen Elements (23) im Regelbereich der Mischvorrichtung (1) mit fallender Temperatur abnimmt.

3. Mischvorrichtung nach Anspruch 1 oder 2,
dadurch gekennzeichnet,
daß das elastische Element (23) eine Feder ist und zumindest teilweise aus einer Formgedächtnislegierung besteht.

4. Mischvorrichtung nach Anspruch 3,
dadurch gekennzeichnet,
daß die Formgedächtnislegierung eine NiTi-Legierung ist.

5. Mischvorrichtung nach Anspruch 3 oder 4,
dadurch gekennzeichnet,
daß eine zweite Feder (21) das Ventil (11, 14) entgegen der Kraft der ersten Feder (23) mit einer Betätigungskraft beaufschlagt.

6. Mischvorrichtung nach Anspruch 5,
gekennzeichnet durch eine Einrichtung zum Variieren der Betätigungskraft der ersten und/oder zweiten Feder (21 oder 23).

7. Mischvorrichtung nach einem der Ansprüche 1 bis 6,
dadurch gekennzeichnet,
daß sie für eine Regeltemperatur im Bereich von -20°C bis 100°C ausgelegt ist.

8. Mischvorrichtung nach Anspruch 7,
dadurch gekennzeichnet,
daß sie für eine Regeltemperatur im Bereich von -10°C Celsius bis +10°C ausgelegt ist.

9. Mischvorrichtung nach einem der Ansprüche 1 bis 8,
dadurch gekennzeichnet,
daß das elastische Element (23) bei einer Abweichung der Temperatur des aus dem Auslaß (6) ausströmenden Fluids in einer Richtung ein im wesentlichen vollständiges Öffnen des Ventils (11, 14) und bei einer Abweichung in der entgegengesetzten Richtung ein im wesentlichen vollständiges Schließen des Ventils (11, 14) bewirkt.

10. Mischvorrichtung nach einem der Ansprüche 1 bis 8,
dadurch gekennzeichnet,
daß sich die Festigkeit des elastischen Elements (23) in einem vorgegebenen Temperaturbereich um die Solltemperatur des gemischten Fluids kontinuierlich verändert, wobei das elastische Element (23) bei einer Temperatur an einem Ende dieses Temperaturbereichs ein im wesentlichen vollständiges Schließen des Ventils (11, 14) und bei einer Temperatur am entgegengesetzten Ende dieses Temperaturbereichs ein im wesentlichen vollständiges Öffnen des Ventils (11, 14) bewirkt.

11. Mischvorrichtung nach Anspruch 10,
dadurch gekennzeichnet,
daß der besagte Temperaturbereich eine Breite von 20°C oder weniger aufweist.
